(19) Europäisches Patentamt
European Patent Office
Office européen des brevets

(11) **EP 2 392 939 B1**

(12) **EUROPEAN PATENT SPECIFICATION**

(45) Date of publication and mention
of the grant of the patent:
**02.04.2014  Bulletin 2014/14**

(51) Int Cl.:
***G01S 5/02*** *(2010.01)*

(21) Application number: **10164917.6**

(22) Date of filing: **04.06.2010**

(54) **Method for determining a region in which a device is located**

Verfahren zur Bestimmung eines Bereichs, in dem sich eine Vorrichtung befindet

Procédé pour déterminer une région dans laquelle est situé un dispositif

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**07.12.2011  Bulletin 2011/49**

(73) Proprietors:
• **Mitsubishi Electric R&D Centre Europe B.V.**
  **1119 NS  Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO SE SI SK SM TR**

(72) Inventors:
• **Noureddine, Hadi**
  **35708 Rennes Cedex 7 (FR)**
• **Gresset, Nicolas**
  **35708 Rennes Cedex 7 (FR)**

(74) Representative: **Maillet, Alain**
  **Cabinet Le Guen Maillet**
  **5, place Newquay**
  **B.P. 70250**
  **35802 Dinard Cedex (FR)**

(56) References cited:
**EP-A2- 1 102 085     GB-A- 2 460 406**

• **PRIYANTHA N B ET AL: "Mobile-assisted localization in wireless sensor networks" INFOCOM 2005. 24TH ANNUAL JOINT CONFERENCE OF THE IEEE COMPUTER AND COMMUNICATIONS SOCIETIES. PROCEEDINGS IEEE MIAMI, FL, USA 13-17 MARCH 2005, PISCATAWAY, NJ, USA, IEEE, PISCATAWAY, NJ, USA LNKD- DOI:10.1109/INFCOM.2005.1497889, vol. 1, 13 March 2005 (2005-03-13), pages 172-183, XP010829058 ISBN: 978-0-7803-8968-7**
• **YIBIN YU ET AL: "Location Discovery for Three-Dimensional Sensor-Actor Networks Using Alternating Combination Quadrilateration" ITS TELECOMMUNICATIONS PROCEEDINGS, 2006 6TH INTERNATIONAL CONFERENCE ON, IEEE, PI, 1 June 2006 (2006-06-01), pages 1021-1024, XP031012591 ISBN: 978-0-7803-9586-2**

**Description**

The present invention relates generally to a method and an apparatus for determining the location of a device in a wireless telecommunication network.

Today, more and more dedicated devices or devices like mobile phones provide Global Position System features or devices like a base station of a wireless cellular telecommunication device newly installed.

Such terminals may be located into areas, like buildings wherein satellite broadcasted signals can not be received.

Even if the signals broadcasted by the satellites can be received, it is not possible to determine accurately the location of the device, for example at which floor of a building the device stands.

The estimation of the distance separating a device and plural sources, like terrestrial equipments based on the observation of the times of arrival available at the device of signals transmitted by the sources, is an example of known technique which enables the determination of the position of the device.

The localization, either relatively or absolutely, of nodes that have transmission or reception abilities of a wireless telecommunication network like for example of wireless cellular telecommunication network or of an ad-hoc network or of a network linking sensors, from the distances separating the nodes, is often not accurate. Let $X_m$ be the position vector of node m in d-dimensions, let $d_{m,n}$ be the observed distance between nodes m and n. The position of each node can be exactly computed if there is a sufficient number of perfect observations. This can be done by solving a system of nonlinear equations $d_{m,n}=|X_m-X_n|$ for all observations $d_{m,n}$. The conditions for unique solution can be addressed by considering the topic of graph rigidity. If there are some nodes with known absolute locations, the calculated positions are absolute ones, otherwise, some nodes are chosen as references and the remaining nodes are localized relatively with respect to them.

In reality, the measurements are corrupted by an error $e_{m,n}$ and $d_{m,n}=|X_m-X_n|+e_{m,n}$. It may for example encompass synchronization errors at the receiver, non-synchronization of the plural nodes which transfer signals and lack of precision in time measurement due to signal sampling.

The paper of Priyantha entitled "Mobile assisted localization in wireless sensor networks" discloses a method for determining a region in which a device is located from signals transferred by a group of nodes.

The patent application GB2460406 discloses a method for determining the geometry of sensor node network using a mass spring model.

The patent application EP1102 085 discloses a positioning system and calculating method in mobile communication system.

The present invention aims at providing a method and a device for enabling the determination of a region in which a node is located in a simple way and even if there is no precise *a priori* knowledge of the location of the node.

To that end, the present invention concerns a method for determining a region in which a device is located from signals transferred by a group of nodes of a wireless telecommunication network, characterised in that the method comprises the steps, executed iteratively for the device of:

- receiving, from each node of the group of nodes, information representative of a region in which the node is located,
- obtaining information representative of the distance separating the device from each node of the group of nodes,
- computing, from the received information and from the obtained information, a region in which the device is located,
- transferring the computed region in which the device is located to each of the nodes of the group of nodes.

The present invention also concerns an apparatus for determining a region in which a device is located from signals transferred by a group of nodes of a wireless telecommunication network, characterised in that the apparatus comprises:

- means for receiving, from each node of the group of nodes, information representative of a region in which the node is located,
- means for obtaining information representative of the distance separating the device from each node of the group of nodes,
- means for computing, from the received information and from the obtained information, a region in which the device is located,
- means for transferring the computed region in which the device is located to each of the nodes of the group of nodes,
- means for controlling iteratively the means for receiving, obtaining, computing and transferring.

Thus, after some iterations, the device has a better estimation of the region it lies into. As the device transfers the determined region, the nodes may refine the region in which they are respectively located with the region in which the device is located.

According to a particular feature, each region received from each node of the group of nodes is approximated by at least one polyhedron.

Thus, as polyhedrons are simple geometrical figures, they can be easily processed and the complexity of the algorithm is reduced while the output precision is not impacted a lot.

According to a particular feature, at least one polyhedron is decomposed into tetrahedrons.

Thus, the computing of the region has a very low complexity.

According to a particular feature, it is determined, for each tetrahedron obtained after decomposition of one polyhedron, a first intermediary region comprising points of the space that are distant of at least a first distance from at least one point of the tetrahedron.

Thus, the computing of the region has a very low complexity.

According to a particular feature, it is determined, for each tetrahedron obtained after decomposition of one polyhedron, a second intermediary region comprising points of the space that are distant of at most a second distance from at least one point of the tetrahedron.

Thus, the computing of the region has a very low complexity.

Furthermore, it is possible to take into account the uncertainty of the location of the nodes in order to define the region the device lies into.

According to a particular feature, for each tetrahedron obtained after decomposition of one polyhedron, a third intermediary region is determined, the third intermediary region is the intersection of the first and second intermediary regions determined for the tetrahedron.

Thus, the computing of the region has a very low complexity.

Furthermore, it is possible to take into account the uncertainty of the location of the nodes in order to define the region the device lies into.

According to a particular feature, the or each third intermediate region is approximated in at least one polyhedron.

Thus, as polyhedrons are simple geometrical figures, they can be easily processed and the complexity of the algorithm is reduced while the output precision is not impacted a lot.

According to a particular feature, for each polyhedron approximating the region received from one node of the group of nodes, a fourth intermediary region is determined, the fourth intermediary region being the union of the third intermediary regions determined for the tetrahedrons composing the polyhedron approximating the region received from one node of the group of nodes.

Thus, the computing of the region has a very low complexity.

According to a particular feature, the computed region in which the device is located is the intersection of the fourth intermediary regions.

Thus, the computing of the region has a very low complexity.

Furthermore, it is possible for the device to take into account the regions of several nodes, which will reduce the size of its own region.

According to a particular feature, the computed region in which the device is located is approximated by at least one polyhedron.

Thus, the computing of the regions has a very low complexity.

According to a particular feature, the method is executed as far as the computed region is different from at least one region previously computed.

Thus, the region of each node is narrowed through iterations.

According to a particular feature, the present invention is executed by the node for which the region is determined.

According to a particular feature, the device is a node of the wireless telecommunication network and the method is executed by each node.

Thus, the nodes regions are mutually computed and narrowed through iterations.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless cellular telecommunication network in which the present invention is implemented;

Fig. 2 is a diagram representing the architecture of a device like a base station in which the present invention is implemented ;

Fig. 3 discloses an example of an algorithm for determining the location of a device according to the present invention;

Fig. 4 discloses an example of an algorithm for determining a region according to the present invention;

Fig. 5 is an example of a first intermediary region used for determining the region wherein a device is located;

Fig. 6 is an example of a second intermediary region used for determining the region wherein a device is located;

Fig. 7 is an example of a third intermediary region which is determined by combining the first and second intermediary regions used for determining the region wherein a device is located;

Fig. 8 is an example of a decomposition into polyhedron of the third intermediary region;

Fig. 9 is an example of a region wherein a device is located which is determined according to the present invention.

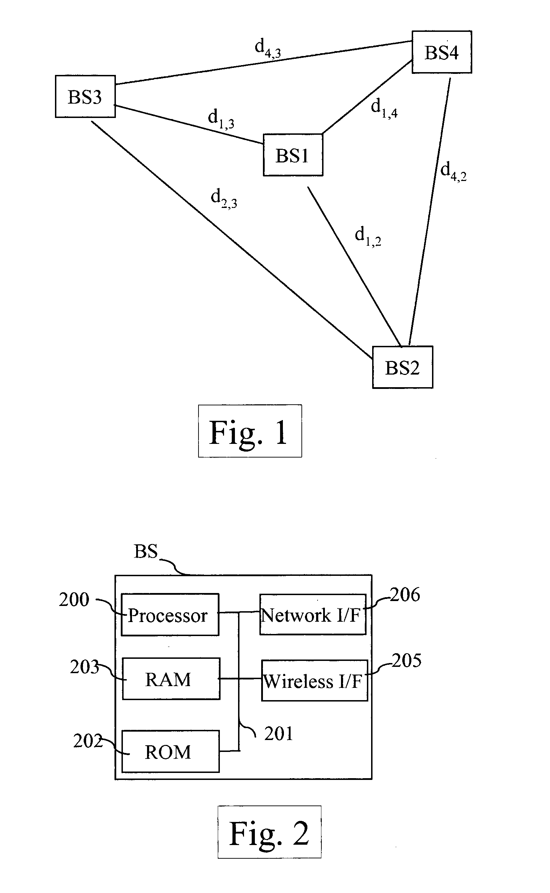

**Fig. 1** represents a wireless cellular telecommunication network in which the present invention is implemented.

The present invention will be disclosed in an example in which the nodes which execute the present invention are base stations BS.

The present invention may also be implemented into Ad-Hoc networks or in sensors networks.

The base stations BS may be pico or femto base stations and/or home base stations.

Pico or femto base stations manage a cell covering few hundred or dozen square meters.

Home base stations are located in a home of a user.

In Fig. 1, a group of four base stations BS1, BS2, BS3 and BS4 is shown. Each base station BS of the group of base stations BS1, BS2, BS3 and BS4 may transmit a signal which is received by the other base stations BS of the group of base stations which is used for determining the distance separating the base stations of the group of base stations. The signals may contain information on the geographical position of the base station BS which transfers the signal, or is a signal that uniquely makes the base station BSi recognizable among the signals received by the mobile terminal MT, which *a priori* knows the positions of the base stations BS.

In the example of Fig. 1, the device is a node. It has to be noted here that the device may be a mobile terminal.

Only four base stations BS are shown in the Fig. 1 for the sake of simplicity, but the group of base stations may comprise a more important or a less important number of base stations BS.

The group of base stations BS comprises the base station BSi and its neighbouring base stations.

In Fig. 1, the group of base stations BS comprises the base station BS 1 and its neighbouring base stations BS2 to BS4.

The distance between the base station BS1 and the base station BS2 is noted $d_{1,2}$. The distance between the base station BS1 and the base station BS3 is noted $d_{1,3}$. The distance between the base station BS1 and the base station BS4 is noted $d_{1,4}$. The distance between the base station BS2 and the base station BS3 is noted $d_{2,3}$. The distance between the base station BS3 and the base station BS4 is noted $d_{4,3}$. The distance between the base station BS2 and the base station BS4 is noted $d_{4,2}$.

According to the invention, each base station BSi with i=1 to 4, computes a region of space wherein the base station BSi is located, under the assumption that measurement errors lay in known distances or intervals. The region in which the base station BSi is located is computed from the signals received from the other base stations BS of the group of base stations BS as well as the region computed and transferred by each other base stations BS of the group of base stations BS.

According to the invention, each base station BSi of the group of base stations BS refines the region in which the base station BSi is located according to the regions received from other base stations of the group of base stations and transfers again the refined region in which the base station BSi is located to other base stations of the group of base stations.

That process is executed iteratively as far as no improvement of the region refinement is found, or for a predetermined number of iterations, or the iterative process is executed periodically on a long-term basis.

At each step of the region refinement, the region $R_i$ of base station BSi in d-dimensions is computed from an estimation of the regions $R_k$ provided by the other base stations BSk of the group of base stations as follows:

$$R_i = \left\{ x_i \in \mathfrak{R}^d \mid \forall k \in \Omega(i), \exists x_k \in R_k \text{ and } d_{i,k} - \left\| x_i - x_k \right\| \in I_{i,k} \right\}$$

where $I_{i,k}$ is the interval of error $e_{i,k}$ and $\Omega(i)$ is the set of other base stations of the group of base stations BS the base station BSi belongs to and $\mathfrak{R}^d$ is the set of the numbers of dimension d and d is the dimension of the space where the region is determined.

Then, the regions are computed in an iterative way, wherein at the beginning, some base stations BS may determine large regions and others may be perfectly located if their positions are known. After each iteration, the regions of the base stations shrink until convergence where no further improvement can be brought and regions stop shrinking.

According to a particular mode of realization of the present invention, each region may be approximated by one polyhedron or plural polyhedrons. In that case, only the corners of the polyhedron or polyhedrons may be exchanged between the base stations. One property of polyhedrons is to be decomposed into tetrahedrons..

In a variant, the definition of the region contour can be split into arcs, lines and only the region contour is exchanged.

The region $R_i$ of base station BSi may be expressed as

$$R_i = \bigcap_{k \in \Omega(i)} \left\{ x_i \in \mathfrak{R}^d \mid \exists x_k \in R_k \text{ and } d_{i,k} - \|x_i - x_k\| \in I_{i,k} \right\} = \bigcap_{k \in \Omega(i)} A_{i,k}$$

where $A_{i,k}$ is the region determined only from the region $R_k$ of the base station BSk and $\cap$ stands for intersection.

By decomposing each region $R_k$ into a union of tetrahedrons $T_{k,j}$, $A_{i,k}$ can be rewritten as follows:

$$A_{i,k} = \left\{ x_i \in \mathfrak{R}^d \mid \exists x_k \in R_k \text{ and } d_{i,k} - \|x_i - x_k\| \in I_{i,k} \right\}$$

$$= \bigcup_j \left\{ x_i \in \mathfrak{R}^d \mid \exists x_k \in T_{k,j} \text{ and } d_{i,k} - \|x_i - x_k\| \in I_{i,k} \right\}$$

$$= \bigcup_j B_{i,k,j}$$

where $B_{i,k,j}$ is the region determined from one of the tetrahedrons $T_{k,j}$ of the base station BSk only and U stands for union.

The observed distance between the base stations BSi and BSk is $d_{i,k}$ and the error interval on the distance $d_{i,k}$ is [a,b]. The area $B_{i,k,j}$ can be defined as follows:

$$B_{i,k,j} = \left\{ x \in \mathfrak{R}^d \, / \, \exists y \in T_{k,j}, d_{i,k} - b \le \|x - y\| \le d_{i,k} - a \right\}$$

Let $d_{min}(x,T_{k,j})$ and $d_{max}(x,T_{k,j})$ be the minimal and maximal distances between a point x and the points of $T_{k,j}$.

It is then possible to define $B_{i,k,j}$ as:

$$B_{i,k,j} = \left\{ x \in \mathfrak{R}^d \, / \, d_{max}(x,T_{k,j}) \ge d_{i,k} - b \text{ and } d_{min}(x,T_{k,j}) \le d_{i,k} - a \right\}$$

According to a particular mode of realization of the present invention, $B_{i,k,j}$ is computed from the boundary elements of the polyhedron $T_{k,j}$.

$B_{i,k,j}$ can be obtained by intersecting the two sets:

$$C_{i,k,j} = \left\{ x \in \mathfrak{R}^d \, / \, d_{max}(x,T_{k,j}) \ge d_{i,k} - b \right\}$$

$$D_{i,k,j} = \left\{ x \in \mathfrak{R}^d \, / \, d_{min}(x,T_{k,j}) \le d_{i,k} - a \right\}$$

The computation of the first intermediary region $C_{i,k,j}$ is done by finding all the points of space that are distant of at least $d_{i,k}$-b from at least one point in $T_{k,j}$.

The computation of the second intermediary region $D_{i,k,j}$ is done by finding all the points of space that are distant of at most $d_{i,k}$-a from at least one point in $T_{k,j}$.

The intersection of the first and second intermediary regions $C_{i,k,j}$ and $D_{i,k,j}$ yields to the third intermediary region $B_{i,k,j}$.

The next step is to approximate the region $R_i$ by at least one tetrahedron.

**Fig. 2** is a diagram representing the architecture of a device like a base station in which the present invention

EP 2 392 939 B1

is implemented.

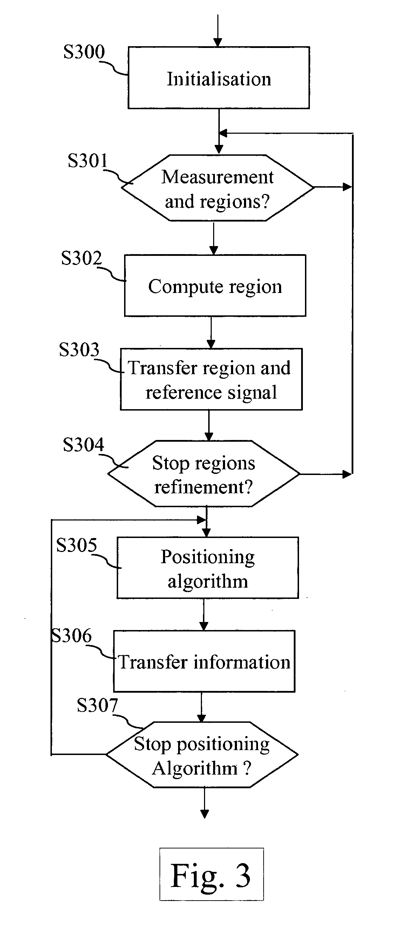

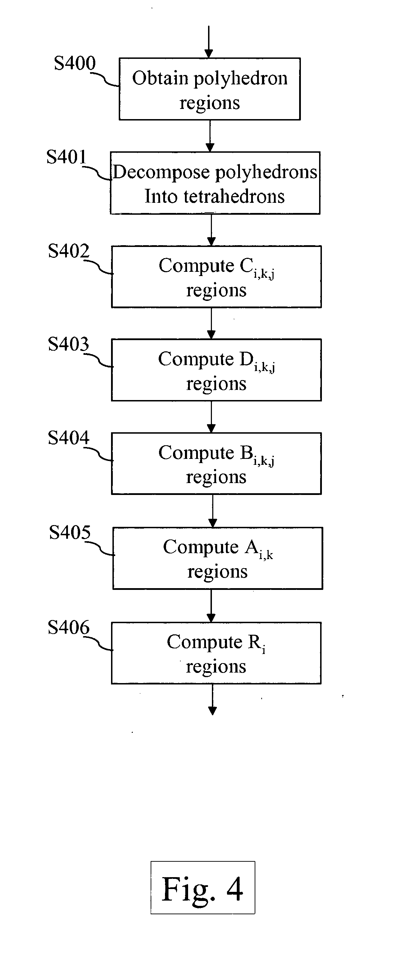

The base station BS has, for example, an architecture based on components connected together by a bus 201 and a processor 200 controlled by the programs as disclosed in Figs. 3 and 4.

It has to be noted here that the base station BS may have an architecture based on dedicated integrated circuits.

The bus 201 links the processor 200 to a read only memory ROM 202, a random access memory RAM 203, a wireless interface 205 and a network interface 206.

The memory 203 contains registers intended to receive variables and the instructions of the program related to the algorithms as disclosed in Figs.3 and 4.

The processor 200 controls the operation of the network interface 206 and of the wireless interface 205.

The read only memory 202 contains instructions of the program related to the algorithms as disclosed in Figs. 3 and 4, which are transferred, when the base station BS is powered on, to the random access memory 203.

The base station BS may be connected to a telecommunication network through the network interface 206. For example, the network interface 206 is a DSL (Digital Subscriber Line) modem, or an ISDN (Integrated Services Digital Network) interface, etc.

**Fig. 3** discloses an example of an algorithm for determining the location of a device according to the present invention.

The present algorithm is executed by each base station of the group of base stations BS.

More precisely, the present algorithm is executed by the processor 200 of each base station BS of the group of base stations BS.

The present algorithm will be disclosed when it is executed by the processor 200 of base station BS 1.

Step S300 is an initialisation phase wherein the processor 200 initialises the region the base station BS1 is located in. For example, the region is determined from global positioning system or from an area code.

At next step S301, the processor 200 checks if some measurements are available at the wireless interface 205 and if regions are received from other base stations BS2 to BS4 of the group of base stations through the network interface 206.

Measurements are representative of the distances $d_{1,2}$, $d_{1,3}$ and $d_{1,4}$. Measurements are for example taken from signal attenuation or time of arrival of signals transferred between the base stations.

As far as no measurements are available at the wireless interface 205 and no regions are received, the processor 200 executes step S301.

If some measurements are available at the wireless interface 205 and if regions are received from other base stations BS2 to BS4 of the group of base stations, the processor 200 moves to step S302.

Received regions are for example under the form of corners of polyhedrons.

At step S302, the processor 200 computes the region in which the base station BS1 is located using the received regions and the previously determined region of the base station BS1.

The region computation will be disclosed in detail in reference to Fig. 4.

At next step S303, the processor 200 transfers the computed region to the other base stations BS2 to BS4 of the group of base stations through the network interface 206.

At next step S304, the processor 200 checks if the region of the base station BS1 needs to be refined.

When the computed region is almost identical to previous determined one or ones, the region does not need to be refined again or when the steps S301 to S304 are executed a predetermined number of times, the region of the base station BS1 does not need to be refined.

If the region of the base station BS1 needs to be refined, the processor 200 returns to step S301.

Otherwise, the processor 200 moves to step S305.

At step S305, the processor 200 executes a positioning algorithm in order to determine the position of the base station BS1 in the last determined region.

For example, if the positioning algorithm is based on a probabilistic model for the measurement error and if *a priori* probability density functions $p_i(x_i)$ on the potential positions $x_i$ of the base station BS1 are known, the joint probability density can be expressed as:

$$p(\{x_i\}) = \prod_{i \in N} p_i(x_i) \prod_{i < j, j \in \Omega(i)} p(d_{i,j} / x_i, x_j)$$

If the base station BS 1 position is perfectly known, or chosen as reference, the *a priori* is taken to be the Dirac function. If the base station BS1 position is completely unknown, the *a priori* is simply dropped.

For example, the positioning algorithm uses a maximum *a posteriori* (MAP) algorithm in which:

$$\{\hat{X}_i^{MAP}\} = \arg\max_{\{x_i\}} p(\{x_i\})$$

For example, the positioning algorithm uses, if no probabilistic model is assumed, a nonlinear least squares (NLLS) estimator, which minimizes the distance between the observations and the estimations:

$$\{\hat{X}_i^{NLLS}\} = \arg\min_{\{x_i\}} \sum_{i<j, j\in\Omega(i)} (d_{i,j} - \|x_i - x_j\|)^2$$

The MAP and NLLS are non-convex optimization problems for which there are local minima that should be avoided. After the computation of the regions, the optimization problem becomes a constrained one, where each region can be seen as a set of constraints on one base station positions.

If the regions are approximated by polyhedrons, the constraints become linear inequalities. The regions may also be used for choosing a good starting point for the constrained optimization algorithm such as Newton methods, steepest descent, simulated annealing, extended Kalman filter (EKF).

For example, the positioning algorithm uses probabilistic approaches such as the nonparametric belief propagation (NBP) in which messages represented by particles are exchanged between the different base stations in order to determine the marginal probability density at each base station. The particles are selected by applying Monte-Carlo techniques. When regions are constructed, the particles will be chosen within these regions.

At next step S306, the processor 200 transfers its position to the other base stations BS and/or to mobile terminals and/or to core network devices of the wireless cellular telecommunication network.

At next step S307,the processor 200 checks if the position of the base station BS1 needs to be refined.

When the determined position is almost identical to previous determined one or ones, the position does not need to be refined again.

If the position of the base station BS1 needs to be refined, the processor 200 returns to step S305.

Otherwise, the processor 200 interrupts the present algorithm.

**Fig. 4** discloses an example of an algorithm for determining regions according to the present invention.

The present algorithm is executed by each base station of the group of base stations BS.

More precisely, the present algorithm is executed by the processor 200 of each base station BS.

The present algorithm will be disclosed when it is executed by the processor 200 of base station BS 1.

At step S400, the processor 200 obtains the regions which have been transferred by each other base station BS2 to BS4 of the group of base stations BS. Regions have polyhedron shapes.

At next step S401, the processor 200 decomposes each region into tetrahedron if needed.

At next step S402, the processor 200 computes each first intermediary region $C_{i,k,j}$ using the following formula:

$$C_{i,k,j} = \{x \in \Re^2 / d_{max}(x, T_{k,j}) \geq d_{i,k} - b\}$$

where i is the index of base station BS1, k is the index of the region transferred by the other base station BSk and j is the index of the tetrahedron which forms the region Rk.

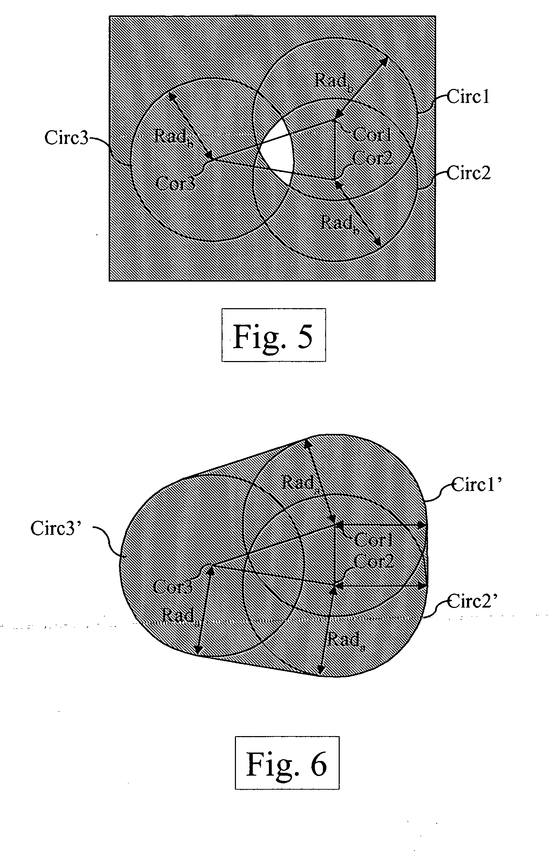

An example of $C_{i,k,j}$ region is given in Fig. 5.

**Fig. 5** is an example of a first intermediary region used for determining the region wherein a device is located.

The computation of the first intermediary region $C_{i,k,j}$ is done by finding all the points of space that are distant of at least $d_{i,k}$-b from at least one point in $T_{k,j}$.

As a result, the first intermediary region $C_{i,k,j}$ is obtained by taking the union of the outer regions of the spheres centred at the corners of $T_{k,j}$ with radius equal to $d_{i,k}$-b. This is illustrated by the Fig. 5 where $T_{k,j}$ is a triangle as the Fig. 5 is a bi dimension example.

The circle Circ1 of radius $Rad_b$ equal $d_{i,k}$-b is the circle the centre of which is the corner Cor1.

The circle Circ2 of radius $Rad_b$ equal $d_{i,k}$-b is the circle the centre of which is the corner Cor2.

The circle Circ3 of radius $Rad_b$ equal $d_{i,k}$-b is the circle the centre of which is the corner Cor3.

In this case, the first intermediary region $C_{i,k,j}$ is the whole hatched space except the intersection of the three discs Circ1 to Circ3.

At next step S403, the processor 200 computes each second intermediary region $D_{i,k,j}$ using the following formula:

$$D_{i,k,j} = \{x \in \Re^2 / d_{min}(x, T_{k,j}) \le d_{i,k} - a\}$$

An example of a second intermediary region $D_{i,k,j}$ is given in Fig. 6.

**Fig. 6** is an example of a second intermediary region used for determining the region wherein a device is located.

The computation of the second intermediary region $D_{i,k,j}$ is done by finding all the points of space that are distant of at most $d_{i,k}$-a from at least one point in $T_{k,j}$.

When considering tetrahedrons, the second intermediary region $D_{i,k,j}$ results from a dilation operation (or a convolution) of $T_{k,j}$ with a structuring element being a sphere of radius $d_{i,k}$-a.

It can be obtained by translating each face to the outside by $d_{i,k}$-a in a direction orthogonal to it and connecting the resulting faces with parts of cylinders and spheres. The Fig. 6 illustrates an example of the second intermediary region $D_{i,k,j}$ in two dimensions when $T_{k,j}$ is a triangle.

The circle Circ1' of radius $Rad_a$ equal $d_{i,k}$-a is the circle the centre of which is the corner Cor1.

The circle Circ2' of radius $Rad_a$ equal $d_{i,k}$-a is the circle the centre of which is the corner Cor2.

The circle Circ3' of radius $Rad_a$ equal $d_{i,k}$-a is the circle the centre of which is the corner Cor3.

At next step S404, the processor 200 computes each third intermediary region $B_{i,k,j}$ by determining the intersection of the first and second intermediary regions $C_{i,k,j}$ and $D_{i,k,j}$.

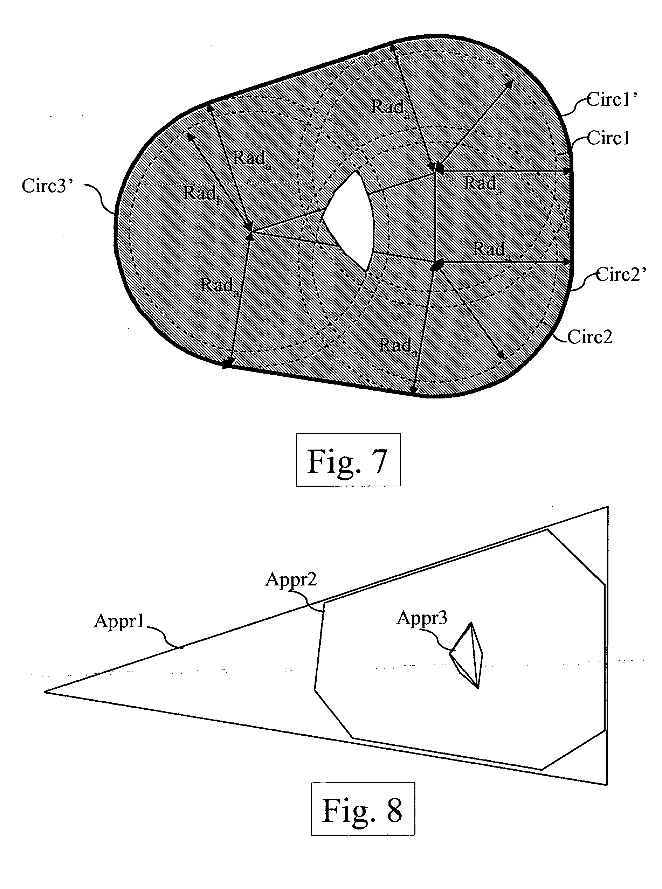

An example of the third intermediary region $B_{i,k,j}$ is given in Fig. 7.

**Fig. 7** is an example of a third intermediary region which is determined by combining the first and second intermediary regions used for determining the region wherein a device is located.

The Fig. 7 is a bi dimension example.

The third intermediary region $B_{i,k,j}$ is hatched in Fig. 7.

Once each third intermediary region $B_{i,k,j}$ is determined as in Fig. 7, each third intermediary region $B_{i,k,j}$ is approximated by polyhedrons, triangles for bi dimension as shown in Fig. 8.

**Fig. 8** is an example of a decomposition into polyhedrons of the third intermediary region.

The approximation of the contour of the third intermediary region $B_{i,k,j}$ may be executed by considering a smaller region contour d composed of flat faces. As the contours are composed or arcs, several tangential surfaces may be made.

Two approximations of the third intermediary region $B_{i,k,j}$ are shown in Fig. 8. The Fig. 8 is a bi dimension example.

A first approximation is composed of the polyhedrons Appr1 and Appr3, the approximation Appr1 is composed of a single triangle and the approximation Appr3 is composed of a polyhedron composed of plural triangles as shown in Fig. 8.

A second approximation is composed of the polyhedrons Appr2 and Appr3, the approximation Appr2 is composed of a polyhedron and the approximation Appr3 is composed of a polyhedron composed of plural triangles.

At next step S405, the processor 200 computes each fourth intermediary region $A_{i,k}$ from the third intermediary region $B_{i,k,j}$.

The union of the third intermediary region $B_{i,k,j}$ forms the fourth intermediary region $A_{i,k}$.

At next step S406, the processor 200 computes the region $R_1$ of the base station BS1. The intersection of the fourth intermediary regions $A_{i,k}$ is the approximation of the region $R_1$ in which the base station is located.

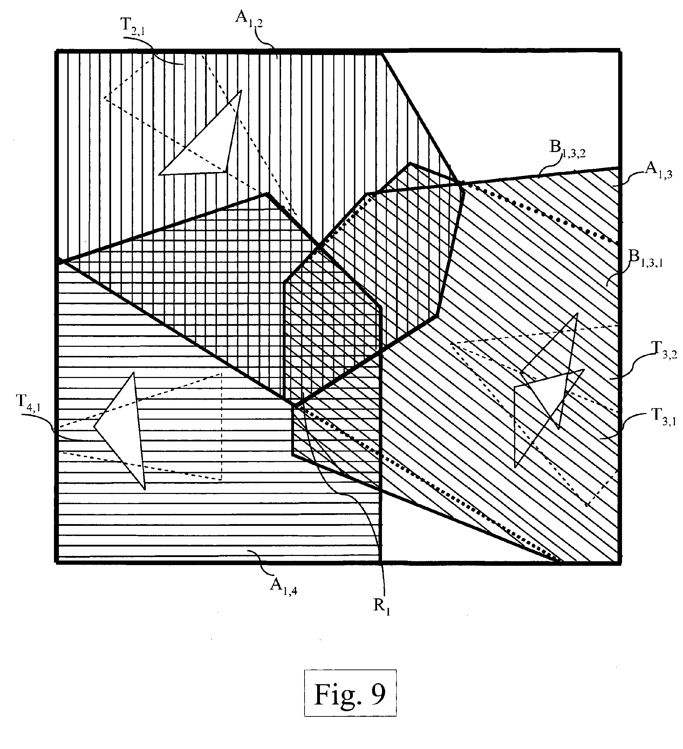

An example of the region R1 in which the base station is located is given in Fig. 9.

**Fig. 9** is an example of a region wherein a base station is located which is determined according to the present invention.

The Fig. 9 is a bi dimension example.

In Fig. 9, the fourth intermediary region $A_{1,2}$ is the fourth intermediary region computed from the region $R_2$ in which the base station BS2 is located. In Fig. 9, the region $R_2$ in which the base station BS2 is located is the triangle $T_{2,1}$. The fourth intermediary region $A_{1,2}$ is the area hatched by vertical lines.

In Fig. 9, the fourth intermediary region $A_{1,3}$ is the region computed from the region $R_3$ in which the base station BS3 is located. In Fig. 9, the fourth intermediary region $A_{1,3}$ is composed of the third intermediary regions $B_{1,3,1}$ and $B_{1,3,2}$. The region $R_3$ is composed of the triangles $T_{3,1}$ and $T_{3,2}$. The fourth intermediary region $A_{1,3}$ is the area hatched by diagonal lines.

The fourth intermediary region $A_{1,4}$ is the region computed from the region $R_4$ in which the base station BS4 is located. In Fig. 9, the region $R_4$ is the triangle $T_{4,1}$. The fourth intermediary region $A_{1,4}$ is the area hatched by horizontal lines.

The region $R_1$ is the intersection of the fourth intermediary regions $A_{1,2}$, $A_{1,3}$ and $A_{1,4}$.

Naturally, many modifications can be made to the embodiments of the invention described above without departing from the scope of the present invention.

**Claims**

1. Method for determining a region in which a device (BS1) is located from signals transferred by a group of nodes (BS2, BS3, BS4) of a wireless telecommunication network, **characterised in that** the method comprises the steps executed iteratively for the device of:

   - receiving, from each node of the group of nodes, information representative of a region in which the node is located, each region received from each node of the group of nodes being approximated by at least one polyhedron which is decomposed into tetrahedrons,
   - determining, for each tetrahedron obtained after decomposition of one polyhedron, a first intermediary region comprising points of the space that are distant of at least a first distance from at least one point of the tetrahedron, or a second intermediary region comprising points of the space that are distant of at most a second distance from at least one point of the tetrahedron,
   - obtaining information representative of the distance separating the device from each node of the group of nodes,
   - computing (S303), from the received information and from the obtained information, a region in which the device is located,
   - transferring (S304) information representative of the computed region in which the device is located to each of the nodes of the group of nodes.

2. Method according to claim 1, **characterised in that** the method comprises further step of determining, for each tetrahedron obtained after decomposition of one polyhedron, a third intermediary region which is the intersection of the first and second intermediary regions determined for the tetrahedron.

3. Method according to claim 1, **characterised in that** each third intermediate region is approximated in one polyhedron.

4. Method according to claim 3, **characterized in that**, for each polyhedron approximating the region received from one node of the group of nodes, a fourth intermediary region is determined, the fourth intermediary region being the union of the third intermediary regions determined for the tetrahedrons composing the polyhedron approximating the region received from one node of the group of nodes.

5. Method according to claim 4, **characterized in that** the computed region in which the device is located is the intersection of the fourth intermediary regions.

6. Method according to claim 5, **characterised in that** the computed region in which the device is located is approximated by at least one polyhedron.

7. Method according to any of the claims 1 to 6, **characterised in that** the method is executed as far as the computed region is different from at least one region previously computed.

8. Method according to any of the claims 1 to 7, **characterised in that** the method is executed by the device for which the region is determined.

9. Method according to claim any of the claims 1 to 8, **characterised in that** the device is a node of the wireless telecommunication network and the method is executed by each node.

10. Apparatus for determining a region in which a device (BS1) is located from signals transferred by a group of nodes (BS2, BS3, BS4) of a wireless telecommunication network, **characterised in that** the apparatus comprises:

    - means (200) for receiving, from each node of the group of nodes, information representative of a region in which the node is located, each region received from each node of the group of nodes being approximated by at least one polyhedron which is decomposed into tetrahedrons,
    - means for determining, for each tetrahedron obtained after decomposition of one polyhedron, a first intermediary region comprising points of the space that are distant of at least a first distance from at least one point of the tetrahedron, or a second intermediary region comprising points of the space that are distant of at most a second distance from at least one point of the tetrahedron,
    - means (200) for obtaining information representative of the distance separating the device from each node of the group of nodes,
    - means (200) for computing, from the received information and from the obtained information, a region in which the device is located,
- means (200) for transferring information representative of the computed region in which the device is located to each of the nodes of the group of nodes,
- means (200) for controlling iteratively the means for receiving, obtaining, computing and transferring.

11. Computer program which can be directly loadable into a programmable device, comprising instructions or portions of code for implementing the steps of the method according to claims 1 to 9, when said computer program is executed on a programmable device.

**Patentansprüche**

1. Verfahren zum Bestimmen eines Bereichs, in dem eine Vorrichtung (BS1) lokalisiert ist, aus durch eine Gruppe von Knoten (BS2, BS3, BS4) eines drahtlosen Telekommunikationsnetzwerks transferierten Signalen, **dadurch gekennzeichnet, dass** das Verfahren die folgenden für die Vorrichtung iterativ ausgeführten Schritte aufweist:

- Empfangen von Information, die einen Bereich darstellt, in dem der Knoten lokalisiert ist, von jedem Knoten der Gruppe von Knoten, wobei jeder von jedem Knoten der Gruppe von Knoten empfangene Bereich durch wenigstens ein Polyeder angenähert wird, das in Tetraeder zerlegt wird,
- Bestimmen, für jeden nach einer Zerlegung von einem Polyeder erhaltenen Tetraeder, eines ersten dazwischenliegenden Bereichs mit Punkten des Raums, die um wenigstens einem ersten Abstand von wenigstens einem Punkt des Tetraeders entfernt sind, oder eines zweiten dazwischenliegenden Bereichs mit Punkten des Raums, die um höchstens einen zweiten Abstand von wenigstens einem Punkt des Tetraeders entfernt sind,
- Erhalten von Information, die den Abstand darstellt, der die Vorrichtung von jedem Knoten der Gruppe von Knoten trennt,
- Berechnen (S303) eines Bereichs, in dem die Vorrichtung lokalisiert ist, aus der empfangenen Information und aus der erhaltenen Information,
- Transferieren (S304) von Information, die den Bereich darstellt, in dem die Vorrichtung lokalisiert ist, zu jedem der Knoten der Gruppe von Knoten.

2. Verfahren nach Anspruch 1, **dadurch gekennzeichnet, dass** das Verfahren einen weiteren Schritt zum Bestimmen eines dritten dazwischenliegenden Bereichs, der die Schnittstelle des ersten und des zweiten dazwischenliegenden Bereichs ist, die für den Tetraeder bestimmt sind, für jeden nach Zerlegung von einem Polyeder erhaltenen Tetraeder aufweist.

3. Verfahren nach Anspruch 1, **dadurch gekennzeichnet, dass** jeder dritte dazwischenliegende Bereich in einem Polyeder angenähert wird.

4. Verfahren nach Anspruch 3, **dadurch gekennzeichnet, dass** für jedes Polyeder, das den von einem Knoten der Gruppe von Knoten annähert, ein vierter dazwischenliegender Bereich bestimmt wird, wobei der vierte dazwischenliegende Bereich die Vereinigung der für die Tetraeder, die das Polyeder bilden, das den von einem Knoten der Gruppe von Knoten empfangenen Bereich annähert, bestimmten dritten dazwischenliegenden Bereiche ist.

5. Verfahren nach Anspruch 4, **dadurch gekennzeichnet, dass** der berechnete Bereich, in dem die Vorrichtung lokalisiert ist, die Schnittstelle der vierten dazwischenliegenden Bereiche ist.

6. Verfahren nach Anspruch 5, **dadurch gekennzeichnet, dass** der berechnete Bereich, in dem die Vorrichtung lokalisiert ist, durch wenigstens ein Polyeder angenähert wird.

7. Verfahren nach einem der Ansprüche 1 bis 6, **dadurch gekennzeichnet, dass** das Verfahren ausgeführt solange wird, wie der berechnete Bereich unterschiedlich von wenigstens einem zuvor berechneten Bereich ist.

8. Verfahren nach einem der Ansprüche 1 bis 7, **dadurch gekennzeichnet, dass** das Verfahren durch die Vorrichtung ausgeführt wird, für die der Bereich bestimmt wird.

9. Verfahren nach einem der Ansprüche 1 bis 8, **dadurch gekennzeichnet, dass** die Vorrichtung ein Knoten des drahtlosen Telekommunikationsnetzwerks ist und das Verfahren durch jeden Knoten ausgeführt wird.

**10.** Vorrichtung zum Bestimmen eines Bereichs, in dem eine Vorrichtung (BS1) lokalisiert ist, aus durch eine Gruppe von Knoten (BS2, BS3, BS4) eines drahtlosen Telekommunikationsnetzwerks transferierten Signalen, **dadurch gekennzeichnet, dass** die Vorrichtung folgendes aufweist:

- Mittel (200) zum Empfangen von Information, die einen Bereich darstellt, in dem der Knoten lokalisiert ist, von jedem Knoten der Gruppe von Knoten, wobei jeder von jedem Knoten der Gruppe von Knoten empfangene Bereich durch wenigstens ein Polyeder angenähert wird, das in Tetraeder zerlegt ist,
- Mittel zum Bestimmen, für jeden nach einer Zerlegung von einem Polyeder erhaltenen Tetraeder, eines ersten dazwischenliegenden Bereichs mit Punkten des Raums, die um wenigstens einem ersten Abstand von wenigstens einem Punkt des Tetraeders entfernt sind, oder eines zweiten dazwischenliegenden Bereichs mit Punkten des Raums, die um höchstens einen zweiten Abstand von wenigstens einem Punkt des Tetraeders entfernt sind,
- Mittel (200) zum Erhalten von Information, die den Abstand darstellt, der die Vorrichtung von jedem Knoten der Gruppe von Knoten trennt,
- Mittel (200) zum Berechnen eines Bereichs, in dem die Vorrichtung lokalisiert ist, aus der empfangenen Information und aus der erhaltenen Information,
- Mittel (200) zum Transferieren von Information, die den Bereich darstellt, in dem die Vorrichtung lokalisiert ist, zu jedem der Knoten der Gruppe von Knoten,
- Mittel (200) zum iterativen Steuern der Mittel zum Empfangen, Erhalten, Berechnen und Transferieren.

**11.** Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 9, wenn das Computerprogramm auf einer programmierbaren Vorrichtung ausgeführt wird.


**Revendications**

**1.** Procédé pour déterminer une zone dans laquelle un dispositif (BS1) est situé à partir de signaux transmis par un groupe de noeuds (BS2, BS3, BS4) d'un réseau de télécommunication sans fil, **caractérisé en ce que** le procédé comporte les étapes exécutées de manière itérative pour le dispositif de :

- réception, à partir de chaque noeud du groupe de noeuds, d'informations représentatives d'-une région dans laquelle le noeud est situé, chaque région reçue de chaque noeud du groupe de noeuds étant approchée par au moins un polyèdre qui est décomposé en tétraèdres,
- détermination, pour chaque tétraèdre obtenu après décomposition d'un polyèdre, d'une première zone intermédiaire comprenant des points de l'espace qui sont distants d'au moins une première distance d'-au moins un point du tétraèdre, ou une deuxième région intermédiaire comportant des points de l'espace qui sont distants d'au plus une seconde distance d'au moins un point du tétraèdre,
- obtention d' une information représentative de la distance séparant le dispositif de chaque noeud du groupe de noeuds,
- calcul (S303), à partir de l'information reçue et de l'information obtenue, d'une région dans laquelle se trouve le dispositif,
- transfert (S304) d'une information représentative de la région calculée dans laquelle le dispositif est situé à chacun des noeuds du groupe de noeuds.

**2.** Procédé selon la revendication 1, **caractérisé en ce que** le procédé comporte en outre l'étape de détermination, pour chaque tétraèdre obtenu après décomposition d'un polyèdre, d'une troisième région intermédiaire qui est le point d'intersection des première et seconde régions intermédiaires calculées pour le tétraèdre.

**3.** Procédé selon la revendication 1, **caractérisé en ce que** chaque troisième région intermédiaire est évaluée dans un polyèdre .

**4.** Procédé selon la revendication 3, **caractérisé en ce que**, pour chaque polyèdre approximant la région reçue d'un noeud du groupe de noeuds, une quatrième région intermédiaire est déterminée, la quatrième région intermédiaire étant l'union des troisièmes régions intermédiaires déterminées pour les tétraèdres composant le polyèdre approximant la région reçue d'un noeud du groupe de noeuds.

**5.** Procédé selon la revendication 4, **caractérisé en ce que** la zone calculée dans laquelle se trouve le dispositif est l'intersection des quatrièmes régions intermédiaires.

**6.** Procédé selon la revendication 5, **caractérisé en ce que** la zone calculée dans laquelle se trouve le dispositif est approximée par au moins un polyèdre.

**7.** Procédé selon l'une quelconque des revendications 1 à 6, **caractérisé en ce que** le procédé est exécuté tant que la région calculée est différente d'au moins une région précédemment calculée.

**8.** Procédé selon l'une quelconque des revendications 1 à 7, **caractérisé en ce que** le procédé est exécuté par le dispositif pour lequel la région est déterminée.

**9.** Procédé selon l'une quelconque des revendications 1 à 8, **caractérisé en ce que** le dispositif est un noeud du réseau de télécommunication sans fil et la méthode est exécutée par chaque noeud.

**10.** Appareil pour déterminer une région dans laquelle un dispositif (BS1) est situé à partir de signaux transférés par un groupe de noeuds (BS2, BS3, BS4) d'un réseau de télécommunication sans fil-, **caractérisé en ce que** l'appareil comporte :

- des moyens (200) de réception, à partir de chaque noeud du groupe de noeuds, d'informations représentatives d'-une région dans laquelle le noeud est situé, chaque région reçue de chaque noeud du groupe de noeuds étant approchée par au moins un polyèdre qui est décomposé en tétraèdres,
- des moyens de détermination, pour chaque tétraèdre obtenu après décomposition d'un polyèdre, d'une première zone intermédiaire comprenant des points de l'espace qui sont distants d'au moins une première distance d'au moins un point du tétraèdre, ou une deuxième région intermédiaire comportant des points de l'espace qui sont distants d'au plus une seconde distance d'au moins un point du tétraèdre,
- des moyens (200) d'obtention d'une information représentative de la distance séparant le dispositif de chaque noeud du groupe de noeuds,
- des moyens (200) de calcul, à partir de l'information reçue et de l'information obtenue, d'une région dans laquelle se trouve le dispositif,
- des moyens (200) de transfert d'une information représentative de la région calculée dans laquelle le dispositif est situé à chacun des noeuds du groupe de noeuds,
- des moyens (200) pour commander de manière itérative les moyens de réception, d'obtention, de calcul et de transfert.

**11.** Programme informatique qui peut être directement chargeable dans un dispositif programmable , comportant des instructions ou portions de code pour mettre en oeuvre les étapes du procédé selon les revendications 1 à 9, lorsque ledit programme informatique est exécuté sur un dispositif programmable.

Fig. 1

Fig. 2

S300 — Initialisation

S301 — Measurement and regions?

S302 — Compute region

S303 — Transfer region and reference signal

S304 — Stop regions refinement?

S305 — Positioning algorithm

S306 — Transfer information

S307 — Stop positioning Algorithm ?

Fig. 3

S400 — Obtain polyhedron regions

S401 — Decompose polyhedrons Into tetrahedrons

S402 — Compute $C_{i,k,j}$ regions

S403 — Compute $D_{i,k,j}$ regions

S404 — Compute $B_{i,k,j}$ regions

S405 — Compute $A_{i,k}$ regions

S406 — Compute $R_i$ regions

Fig. 4

Fig. 5

Fig. 6

**Fig. 7**

**Fig. 8**

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2460406 A

- EP 1102085 A